# EUROPEAN PATENT APPLICATION

(11) **EP 1 318 031 A1**
(43) Date of publication of application: **11.06.2003**
(21) Application number: 02026833.0
(22) Date of filing: 29.11.2002
(51) Int. Cl.: B60C 15/06

(54) **Pneumatic tire with textile chafer reinforcement**

(30) Priority: 06.12.2001 US 4123
(71) Applicant: THE GOODYEAR TIRE & RUBBER COMPANY, Akron, Ohio 44316-0001 (US)
(72) Inventor: Colantonio, Laurent, 6600 Bastogne (BE); Fourgon, Fernand Antoine Joseph, 6600 Bastogne (BE); Philpott, Frank, 5465 Waldbredimus (LU); Schmitz, Frank, 7780 Bissen (LU); Roesgen, Alain Emile Francois, 3397 Roeser (LU)
(74) Representative: Leitz, Paul

(57) **Abstract**

A pneumatic tire bead area construction for improved chafer cracking resistance during run-flat (uninflated) tire operation comprises a chafer reinforcement fabric component (250) that is positioned at the surface of the chafer (136) wherever it may contact the wheel rim flange (122) during normal tire operation, and especially during uninflated tire operation. The fabric component (250) may be anchored by extending it around the bead. The fabric component may replace the toeguard (116), thereby further reinforcing and protecting the bead area by extending the chafer reinforcement fabric component (250) along the surfaces of the bead area (296) wherever surfaces of the tire can contact the wheel rim (120) and rim flange (122) during mounting of the tire and during operation of the tire (101).

## Description

### Technical Field of the Invention

The present invention relates to run-flat pneumatic tire construction, and, more particularly to run-flat pneumatic tire bead area construction.

### Background of the Invention

Modern pneumatic vehicle tires typically include a pair of axially separated, inextensible beads which serve to hold the tire on a wheel rim as well as to provide a structural foundation for the reinforced carcass plies to which the other tire components, such as the sidewalls and tread, are attached. A circumferentially disposed bead filler apex extends radially outward from each of the two beads.

One or more carcass plies extend between the two beads, by way of the sidewalls and the tire crown. Each carcass ply has two axially opposite end portions. The end portions of at least one carcass ply are turned up around, or clamped to, the beads, thereby anchoring the ends of one or more carcass ply layers. During tire construction, tread rubber and sidewall rubber are applied axially and radially outward of the one or more reinforced carcass plies.

The lower sidewall in the bead region of the tire contributes a substantial amount to the rolling resistance or rolling friction of the tire. The rolling resistance corresponds to an energy loss taking place within the tire's structure and is related to the cyclical flexure of the tire components, including the tread and its underlying structures such as the belts, as well as, especially, the portions of the sidewall that are closest to the bead regions where the flexural strain, and energy loss, is greatest.

The energy losses associated with a tire's rolling resistance correspond to heat accumulation within the tire's structure. Under conditions of severe operation, as at high speed or during operation of an uninflated run-flat tire having extended mobility properties, flexure-induced heating in the bead region portion of the sidewalls can be especially problematic.

US-A- 3,253,693 discloses data on radial and circumferential deformations within tires. The deformations that take place in the bead region of the sidewalls result in shearing stresses during normal operation of the tire and especially during severe operating conditions. Bead-region shear stresses have both circumferential and radial orientation. The resulting shear strains or deformations correlate with high flexure within the bead regions. In the case of run-flat or extended mobility technology (EMT) tires, sidewall flexure in the bead region can lead to a shortened run-flat operational service life. More specifically, EMT tires operating under run-flat conditions (run while un-inflated) inevitably undergo deterioration and failure after operation for a certain distance; often the failure mode involves cracking of the parts of the tire (i.e., the chafers) that make the most immediate contact with the wheel rim's flange, presumably due to rim chafing. The chafer cracks are oriented at 45 degrees to the radial direction, indicating a shear strain effect in the bead regions. Once chafer cracking has begun, continued operation of the tire, even after repair and re-inflation, generally causes the cracks to propagate enough to cause unrepairable tire failure.

Recent investigations have shown a high difference of radial-circumferentially oriented shear strains between the footprint area at the "bottom" of the tire where it presses against the road, and the part of the tire that is 180 degrees from the footprint, i.e., the top of tire. This difference between the shear strains at the top and bottom of the tire is also referred to as the cycle amplitude of shearing strain, a variable which, when extreme, correlates with chafer cracking during the uninflated operation of EMT tires.

Among the methods used to reinforce the bead region of radial-ply tires is the incorporation of "chippers." A chipper is a circumferentially deployed metal or fabric layer that is disposed within the bead region in the portion of the tire where the bead fits onto the wheel rim. More specifically, each of the chipper(s)(one or more) used in each bead region of a given tire typically lies inward of the wheel rim (i.e., toward the bead) and inward (i.e., radially inward, relative to the bead viewed in cross section) of the portion of the ply that turns upward around the bead. Typical single chippers are made of parallel-aligned, metal or polymer cords that are oriented at an angle of about 25 degrees with respect to the circumferential direction.

The width of the chipper is the distance to which it extends radially outward from the bead region. The width of the chipper is one variable that can be used to "tune" a tire's handling and steering performance. Chippers typically extend to a radial distance of about 5 to about 20 millimeters above the wheel's rim flange.

Generally, chippers provide a stiffening influence to the radially inward portion of the sidewall most adjacent to the bead region. The stiffening increases the resistance to cyclical flexure of the sort referred to above. In other words, the increased stiffness afforded by chippers works to reduce the amount of flexural deformation and resultant shearing stresses and strains in the axially inward portions of the sidewalls that are most immediately adjacent to the beads.

The use of wire chippers in standard non-EMT tires improves handling and steering performance, especially at high speeds. The formation of standing waves in non-EMT tires during high-speed operation can also be inhibited by the stiffness/damping characteristics of the final tire design, including the choice of chipper width. Flat spotting, i.e. the tendency of the tread of a tire to sustain a flat spot in the ground-contacting portion of the tread when a vehicle has been parked or otherwise sitting for a prolonged period, is also alleviated by the use of chippers.

Unfortunately, chippers have not been able to prevent undesirably early sidewall/chafer cracking during run-flat operation of certain EMT tires. In particular, high aspect ratio EMT tires (aspect ratio of about 60 or more) which are operated in run-flat mode while either highly loaded or while mounted with a high camber angle (2 degrees or more) exhibit this problem. For example, a 235/60R16 EMT tire with 2 plies, fabric toeguards, and pre-cured beads was tested on a BMW 7 series vehicle. Run-flat durability test results on three tires exhibited chafer cracking failures after only 60, 81, and 128 kilometers of running uninflated at 90 kilometers per hour. The cracking occurred in the chafer on the axially inward side of the tire, i.e., the cambered side of the tire. It is an object of the present invention to provide a means for improving resistance to such early tire failure due to chafer cracking, even under severe conditions such as those described hereinabove.

### Summary of the Invention

According to the invention, a pneumatic tire having one or more carcass plies extending between two inextensible beads adapted for mounting on a wheel rim that has a rim flange on each axial side of the tire, and each bead being surrounded by a bead area including a chafer that comprises the portion of the bead area that is in contact with the rim flange, the tire is characterized by: a chafer reinforcement fabric component positioned at a surface where the chafer contacts the wheel rim flange.

According to the invention, the pneumatic tire is further characterized in that when the tire is mounted on the wheel rim, the chafer reinforcement fabric component extends along the outer surface of the chafer to the radially and axially outermost point of the rim flange. Wherein the tire is designed to be operated uninflated, and has a rim flange protector that extends the chafer to follow an axially outward curvature of the rim flange, the tire is further characterized in that when the tire is mounted on the wheel rim, the chafer reinforcement fabric component extends along the outer surface of the chafer to the axially outermost point of the rim flange protector. Wherein the bead area includes a toe and a bead base extending axially inward from the chafer and in contact with the wheel rim, the tire is further characterized in that the chafer reinforcement fabric component additionally reinforces and protects the bead area by extending along the surfaces of the toe and the bead base.

According to the invention, the pneumatic tire is further characterized by the chafer reinforcement fabric component extending axially inward from the chafer radially inward of and around the bead.

According to the invention, the pneumatic tire is further characterized in that the chafer reinforcement fabric component is comprised of fibers that are woven, having weaving angles in the range of 70 degrees to 110 degrees. Furthermore, the chafer reinforcement fabric component in the tire is comprised of fibers that are oriented between 30 degrees and 60 degrees with respect to the radial direction. Preferably, the chafer reinforcement fabric component comprises organic fibers, and further preferably, the chafer reinforcement fabric component comprises monofilament fibers.

According to the invention, the pneumatic tire is further characterized in that the chafer reinforcement fabric component is impregnated with an elastomer adapted for chafing and tear resistance.

According to the invention, a chafer reinforcement for a pneumatic tire having one or more carcass plies extending between two inextensible beads adapted for mounting on a wheel rim that has a rim flange on each axial side of the tire, and each bead being surrounded by a bead area including a chafer that comprises the portion of the bead area that is in contact with the rim flange, the chafer reinforcement is characterized by a chafer reinforcement fabric component positioned at a surface where the chafer contacts the wheel rim flange.

According to the invention, the chafer reinforcement is further characterized in that the chafer reinforcement fabric component extends along the entire outer surface of the chafer.

According to the invention, the chafer reinforcement is further characterized in that the chafer reinforcement fabric component additionally reinforces and protects the bead area by extending along the surfaces of the bead area wherever surfaces of the tire can contact the wheel rim and rim flange during mounting of the tire and during operation of the tire.

According to the invention, the chafer reinforcement is further characterized by the chafer reinforcement fabric component extending axially inward from the chafer radially inward of and around the bead.

According to the invention, the chafer reinforcement is further characterized in that the chafer reinforcement fabric component is comprised of cords; and in the tire, the cords are oriented at a non-zero angle versus the radial direction.

According to the invention, the chafer reinforcement fabric component is comprised of fibers that are woven, having weaving angles in the range of 70 degrees to 110 degrees; and
the fibers of the chafer reinforcement fabric component in the tire are oriented between 30 degrees and 60 degrees with respect to the radial direction.

According to the invention, the chafer reinforcement is further characterized in that the chafer reinforcement fabric component comprises monofilament organic fibers.

According to the invention, the chafer reinforcement is further characterized in that the chafer reinforcement fabric component is impregnated with an elastomer adapted for chafing and tear resistance.

According to the invention, a method of constructing a pneumatic tire having one or more carcass plies extending between two inextensible beads adapted for mounting on a wheel rim that has a rim flange on each axial side of the tire, and each bead being surrounded by a bead area including a chafer that comprises the portion of the bead area that is in contact with the rim flange. The method comprises the steps of: constructing a chafer reinforcement fabric component from fibers; positioning the chafer reinforcement fabric component at the surface of the chafer where the chafer contacts the wheel rim flange; and orienting the fibers at a non-zero angle to the radial direction, preferably 30 to 60 degrees.

According to the invention, the method further comprises the steps of: anchoring the chafer reinforcement fabric component by extending the chafer reinforcement fabric component from the chafer around the bead; and further reinforcing and protecting the bead area by extending the chafer reinforcement fabric component along the surfaces of the bead area wherever surfaces of the tire can contact the wheel rim and rim flange during mounting of the tire and during operation of the tire.

Other objects, features and advantages of the invention will become apparent in light of the following description thereof.

### Brief Description of the Drawings

Reference will be made in detail to preferred embodiments of the invention, examples of which are illustrated in the accompanying drawing figures. The figures are intended to be illustrative, not limiting.

Certain elements in selected ones of the drawings may be illustrated not-to-scale, for illustrative clarity. The cross-sectional views, if any, presented herein may be in the form of "slices", or "near-sighted" cross-sectional views, omitting certain background lines which would otherwise be visible in a true cross-sectional view, for illustrative clarity.

Elements of the figures can be numbered such that similar (including identical) elements may be referred to with similar numbers in a single drawing. For example, each of a plurality of elements collectively referred to as 199 may be referred to individually as 199a, 199b, 199c, etc. Or, related but modified elements may have the same number but are distinguished by primes. For example, 109, 109', and 109" are three different elements which are similar or related in some way, but have significant modifications, e.g., a tire 109 having a static imbalance versus a different tire 109' of the same design, but having a couple imbalance. Such relationships, if any, between similar elements in the same or different figures will become apparent throughout the specification, including, if applicable, in the claims and abstract.
Figure 1 is a meridional cross-sectional view of one side of a typical prior art two-wedge-insert-per-sidewall run-flat tire mounted on a wheel rim (partially shown);
Figure 2A is a meridional cross-sectional view of one bead area and a partial wheel rim of the prior art tire of Figure 1;
Figure 2B is a meridional cross-sectional view of one bead area and a partial wheel rim of a run-flat tire similar to the tire of Figure 1, but has a chipper added as reinforcement and as a stiffener for the bead area;
Figure 2C is a meridional cross-sectional view of one bead area and a partial wheel rim of an inventive run-flat tire that is an improvement of the tire of Figure 1, due to the addition of a chafer reinforcement fabric that wraps around the bead, according to the invention;
Figure 2D is a meridional cross-sectional view of one bead area and a partial wheel rim of an inventive run-flat tire, similar to that of Figure 2C, but without a specific chafer compound between the chafer reinforcement fabric and the ply, according to the invention; and
Figure 3 is a side, axially directed, view of the main structural elements of the chafer reinforcement fabric, seen as it would be curved to follow the bead around the circumference of the tire, according to the invention.

### Definitions

"Apex" or "bead filler apex" means an elastomeric filler located radially outward of the bead core and between the plies and the ply turnup ends.

"Axial" and "Axially" means the lines or directions that are parallel to the axis of rotation of the tire.

"Bead" or "Bead Core" means the circumferentially inextensible metal wire assembly which forms the core of the bead area, and is associated with holding the tire to the rim.

"Bead Area" means the circumferentially-extending region of the tire surrounding and including the bead, and shaped to fit the wheel rim and bead seat.

"Bead Base" means the relatively flat portion of the bead area between the bead heel and bead toe and which contacts the wheel rim's bead seat.

"Bead Heel" means the axially outer bead area edge that contacts the rim flange and the bead seat where they join.

"Bead Seat" means the flat portion of the rim on which the bead area rests.

"Bead Toe" means the axially inner bead area edge.

"Camber" means tilt of a vehicle's wheel. When the wheel top tilts outward from the vertical there is positive camber; inward tilt at the top is negative camber.

"Carcass" means the tire structure apart from the belt structure, tread, undertread over the plies, but including the beads.

"Chafer" means rubber, with or without fabric reinforcement, around the bead in the rim flange area to prevent chafing of the tire by the rim parts.

"Chipper" refers to a narrow band of fabric or steel cords located in the bead area whose function is to reinforce the bead area and stabilize the radially inwardmost part of the sidewall.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section. It can be further extended to mean circular lines or directions extending around any part of the tire but having a constant radius from the axis of rotation.

"EMT tire" stands for Extended Mobility Technology tire and EMT tire means the same as "run-flat tire," which refers to a tire that is designed to provide at least limited operational service under conditions when the tire has little to no inflation pressure.

"Equatorial Plane" means the plane perpendicular to the tire's axis of rotation and passing through the center of its tread; or the plane containing the circumferential centerline of the tread.

"Flange" or "Rim Flange" means the approximately radially projecting curved edge on a rim which retains an outer edge of a tire bead.

"Flat spotting" is the tendency of the tread of a tire to sustain a flat spot in the ground-contacting portion of the tread when a vehicle has been parked or otherwise sitting for a prolonged period.

"Gauge" refers generally to a measurement and specifically to thickness.

"Lateral" means a direction parallel to the axial direction.

"Ply" means a cord-reinforced layer of rubber-coated radially deployed or otherwise parallel cords.

"Radial" and "radially" mean directions radially toward or away from the axis of rotation of the tire.

"Radial Ply Structure" means the one or more carcass plies of which at least one ply has reinforcing cords oriented at an angle of between 65° and 90° with respect to the equatorial plane of the tire.

"Radial Ply Tire" means a belted or circumferentially-restricted pneumatic tire in which at least one ply has cords which extend from bead to bead and are laid at cord angles between 65° and 90° with respect to the equatorial plane of the tire.

"Rim" or "Wheel Rim" means the generally cylindrical portion of a wheel that provides support for a tire mounted on the wheel. The tire beads are seated on the rim, held in place by rim flanges.

"Rim Flange Protector" means an annular sidewall projection in the bead area that extends the chafer to follow the axially outward curvature of the rim flange, and generally protrudes at least as far out as the flange.

"Sidewall" means that portion of a tire between the tread and the bead.

"Toeguard" means a strip of material, usually fabric and rubber, which is applied around the axially inner portion of the bead area to help protect the bead toe from damage during the mounting process.

"Tread width" means the arc length of the tread surface in a plane including the axis of rotation of the tire.

"Turnup end" means the end portion of a carcass ply that turns upward (i.e., radially outward) from the beads about which the ply is wrapped.

"Wheel" refers to a generally cylindrical, typically metallic, disc-like mechanical support for supporting a typically pneumatic tire and mounting to a vehicle axle. A wheel has a rim with two axially spaced-apart flanges (or annular lips), each flange adapted to securely receive a respective one of two beads of the mounted tire.

### Detailed Description of the Invention

The present invention will be described with respect to a preferred embodiment which is a high aspect ratio EMT or run-flat tire because that is the type of application that most urgently needs the improved resistance to chafer cracking that is provided by the inventive chafer reinforcement. However, other benefits of the invention, such as tire performance improvements, have been observed that are not necessarily related to the operation of run-flat tires. Therefore, it should be understood that the scope of the present invention is intended to include all pneumatic tires having beads and bead areas which are mounted on wheel rims having flanges for retaining the bead areas on the wheel rims.

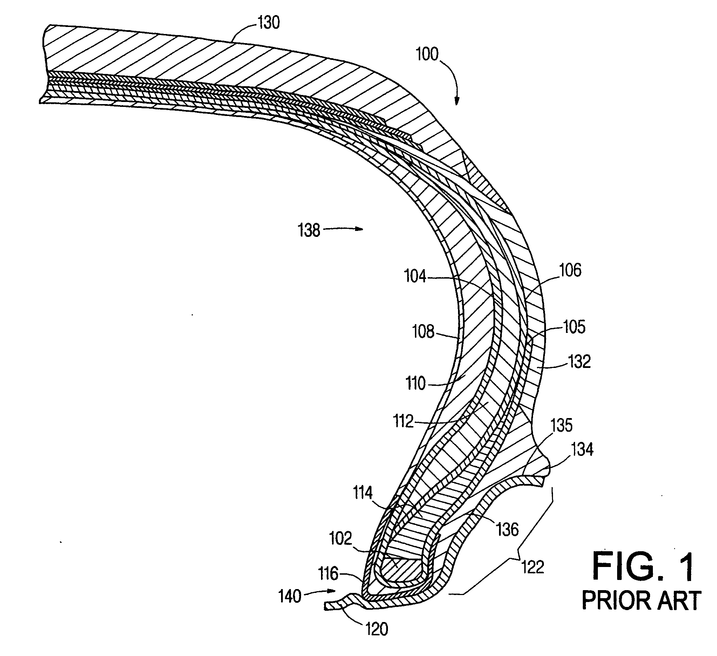

Figure 1 is a meridional cross-sectional view of one side of a typical, prior art, inflated two-wedge-insert-per-sidewall run-flat tire 100 mounted on a wheel rim 120 (partially shown). While only one side of the tire 100 and rim 120 is show, it is understood that the construction is mirrored on the other side. The exemplary run-flat tire 100 comprises an inner liner 108, a tire carcass 138 and a tread belt package 130. The tire carcass 138 includes two beads 102 (one shown) with first carcass ply 104 and second carcass ply 106 extending between the two beads 102. Two sidewalls 132 (one shown) form the outer surface of the carcass 138. The inner liner 108 lies adjacent to a first wedge insert 110 which is bounded on its far side from the inner liner 108 by the first carcass ply 104. A second wedge insert 112 is disposed between the first carcass ply 104 and the second carcass ply 106. At least the first carcass ply 104 is wrapped around the bead 102 and has a turn-up end 105 that terminates radially outward from the bead 102, generally at least above (radially outward of) a rim flange protector 134, and often as far out as the middle portion of the sidewall 132 where the tire's section width is the greatest. An apex 114 fills the space radially outward of the bead 102 and between the plies 104, 106 and the ply turn-up end 105. A chafer 136, comprising an abrasion-and-tear-resistant elastomer (chafer compound), extends through the bead area along a rim flange 122 of the rim 120, and includes at least a portion of a sidewall projection known as a rim flange protector 134. As shown in Figure 1, a chafer surface 135 engages the rim flange 122 when tire 100 is inflated. A rubber-impregnated fabric toeguard 116 is wrapped around the bead 102 such that the fabric of the toeguard 116 is close to or at the surface of the tire 100 at a toe portion 140 of the bead area. The fabric toeguard 116 extends radially outward on both sides of the bead 102, but is not positioned near the surface of the tire 100 in the chafer 136, rather the toeguard 116 is typically layered underneath the special elastomer of the chafer 136.

When a tire such as the tire 100 is operated under load, shearing strains arise in the chafer 136 wherever a surface of the tire 100 chafes against the rim flange 122, i.e., in the region of the chafer 136 . When the tire 100 is operated in run-flat mode (under load but substantially without inflation pressure), there is a considerable increase in sidewall flexing and in the forces pressing the chafer 136 against the rim flange 122. In the case of tire designs where the rim flange protector 134 has a chafer surface 135 which contacts the rim flange 122 during normal tire operation, run-flat operation will generally increase the area of contact between the chafer surface 135 of the rim flange protector 134 and the rim flange 122. Thus, run-flat operation greatly increases the shearing strains in magnitude and in area of effect, and also increases heating of the tire, in a way which can be enough to cause the elastomer in the chafer 136 to "crack" at its surface. Under continued stress these chafer cracks propagate inward, irreparably damaging the tire so that it cannot be used again, even if the leak which originally caused the run-flat event is repaired. Other conditions that aggravate the chafer cracking problem include run-flat operation of high aspect ratio EMT tires (aspect ratio of about 60 or more) which are operated in run-flat mode while either highly loaded and/or while mounted with a high camber angle (2 degrees or more).

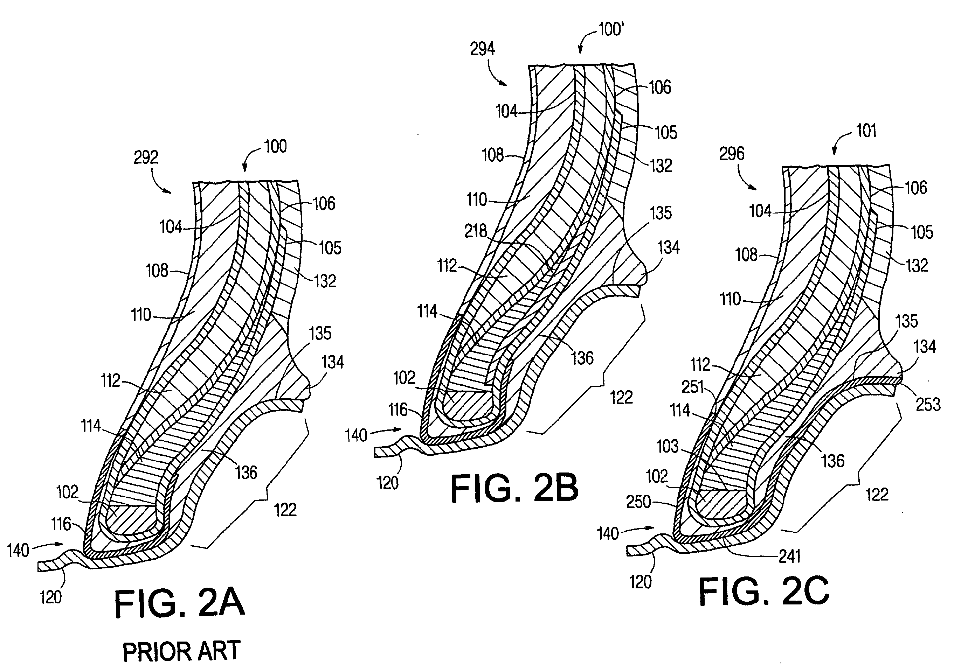

Figures 2A, 2B, and 2C (2A-2C), show meridional cross-sectional views of one bead area 292, 294, 296 of three designs of the EMT tire 100 mounted on a wheel rim 120 (partially shown). The three bead area designs 292, 294, 296 were constructed for tests conducted on the inventive chafer reinforcement to be described hereinbelow.

Figure 2A shows the bead area 292 of the standard design EMT tire 100 as shown in Figure 1. The only fabric reinforcement for the chafer 136 is the toeguard 116 which lies between the chafer 136 and the carcass ply turnup 105, as described hereinabove with reference to Figure 1.

Figure 2B shows the bead area 294 of an EMT tire 100' that is similar to the tire 100, but has a chipper 218 that has been added as reinforcement and as a stiffener for the bead area 294. The chipper 218 is located axially inward of the ply turnup end 105 of ply 104 and extends from just above the bead 102 radially outward between the second ply 106 and the ply turnup end 105. The chipper 218 as used for the present testing comprised two layers of crossed cords having cord angles and other dimensions and characteristics which have been shown to improve resistance to chafer cracking in EMT applications less demanding than those addressed by the present invention. An example of this chipper design is disclosed in a commonly owned, copending EP-A-1 145 874.

Figure 2C shows the bead area 296 of an inventive EMT tire 101 that is an improvement of the tire 100, due to the addition of an inventive chafer reinforcement fabric component 250 that wraps around the bead 102. Most importantly, the chafer reinforcement fabric component 250 is positioned at the surface 135 of the chafer 136 wherever the chafer can contact the wheel rim flange 122. Therefore, the radially and axially outermost end 253 of the chafer reinforcement fabric component 250 is extended on the chafer surface 135 of the rim flange protector 134 to at least the axially outermost extent of the rim flange 122, limited, of course, to the axially outermost extent of the rim flange protector 134.

The chafer reinforcement fabric component 250 is anchored in position by being wrapped around the bead 102 extending axially inward from the chafer 136 below (radially inward of) the bead, and then extending radially outward to an axially inward end 251 above (radially outward of) the bead 102. For example, the axially inward end 251 is disposed approximately midway between a radially outermost surface 103 of the bead 102 and the radially outermost extent of the rim flange 122. In general, the chafer reinforcement fabric component 250 will be anchored as long as it is wrapped around the bead 102.

The chafer reinforcement fabric component 250 may also replace the toeguard 116, providing substantially the same function of reinforcing and protecting the toe 140 by being positioned close to or at the surface of the tire 101 in the toe region 140 of the bead area 296. A bead base region 241 of the tire 101, between the toe region 140 and the chafer 136, may also be reinforced and protected by the chafer reinforcement fabric component 250 being positioned close to or at the surface of the tire 101 in the bead base region 241 of the bead area 296.

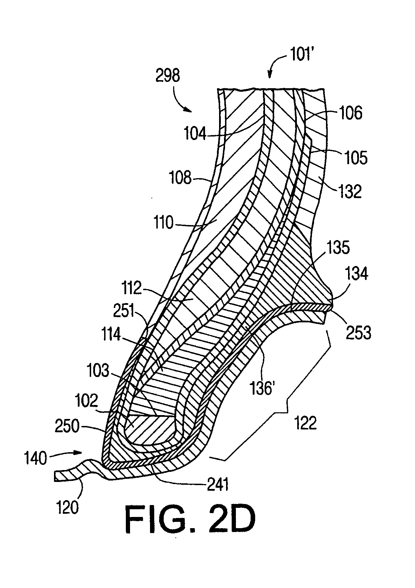

Furthermore, the chafer reinforcement fabric component 250 should allow a simplification in construction of the bead area 298 of inventive tire 101. Since the chafer reinforcement fabric component 250 provides (and improves) the chafing resistance that is provided by the prior art chafer component 136, there is no longer a need for constructing the chafer 136 with a special chafer compound formulation of elastomer. Thus, in the bead area 298 of inventive tire 101' as shown in Figure 2D, the only difference with tire construction 101, as shown in Figure 2C, is that the chafer 136' is constructed with a standard elastomer, such as, for example, the elastomer used in the sidewall 132. The result is that the sidewall 132, the rim flange protector 134, and the chafer 136' are of a single, unitary construction of a single elastomer compound.

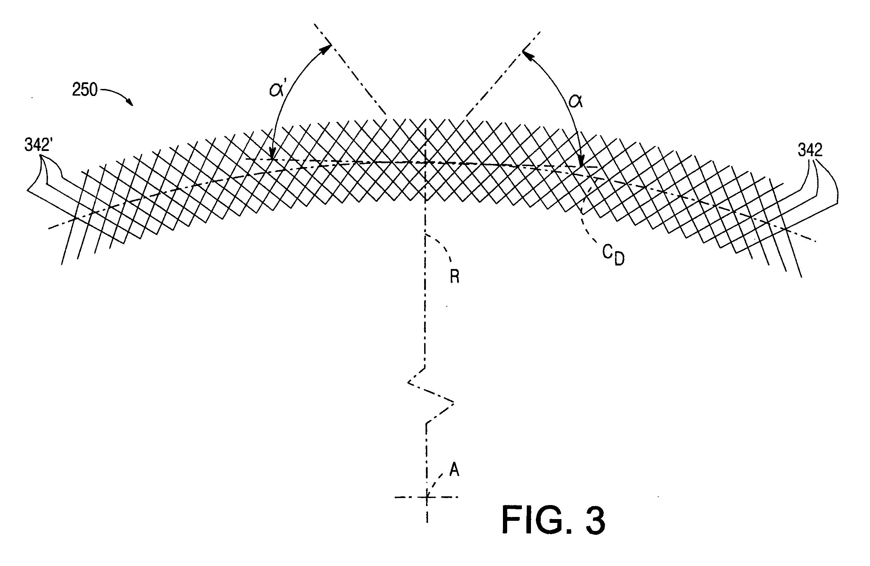

Figure 3 provides a side view (or axially directed view) of the main structural elements of the chafer reinforcement fabric component 250. The chafer reinforcement fabric component 250 is preferably a square woven fabric of reinforcing cords 342 and 342', impregnated in a suitable elastomer, preferably a chafer compound, i.e., an elastomer adapted for chafing and tear resistance. The term "square woven" refers to fabric wherein the cords 342 and 342' are woven together with the cords 342 being approximately perpendicular to the cords 342'. While a substantially ninety-degree weaving angle (i.e., "square weave") is preferred for the present invention, it is within the scope of the invention to use other weaving angles, in the range of 70 degrees to 110 degrees. An alternate embodiment of the chafer reinforcement fabric component 250 comprises at least one layer of reinforcing cords 342 and 342', impregnated in a suitable elastomer, wherein the cords 342 and 342' cross each other at angles in the range of 70 degrees to 110 degrees without being woven together. The reinforcing cords 342, 342' are made of any suitable non-metallic cord material including, for example, polyamide, polyester, rayon, and aramid. Preferably the reinforcing cords are monofilaments, rather than twisted, stranded or cabled multifilaments that could channel air leaks once they are abraded. In the preferred embodiment, the cords can be woven into a fabric component having reinforcing cords disposed at 30 EPI (ends per inch).

In Figure 3 the chafer reinforcement fabric component 250 can be seen as it would be curved to follow the bead around the circumference of the tire at a nominal bead radius "R" about the tire's axis of rotation "A". An important aspect of the present invention is that the reinforcing cords 342 are at a non-zero angle α relative to the circumferential direction C_{D}, which is perpendicular to the radius R, and the reinforcing cords 342' are at a non-zero angle α' relative to the circumferential direction C_{D}. The angle α' is preferably equal in magnitude to angle α, but oriented (as illustrated) in the "opposite direction," i.e., the reinforcing cords 342' are a mirror image of the reinforcing cords 342 with the radius R being the reflection axis. Furthermore, the angle α is preferably 45 degrees, and the angle α' is preferably -45 degrees, i.e., 45 degrees in the opposite direction from the angle α, thereby producing an ninety degree angle between thusly "square" woven reinforcing cords 342, 342' of the chafer reinforcement fabric component 250. It is believed that angling the chafer reinforcement fabric component 250 in the chafer 136 as described provides effective resistance to the chafer cracking observed in run-flat operation of EMT tires. It should be understood that the view of Figure 3 is from one axial side of the tire 101 which has the chafer reinforcement fabric component 250 installed in it. Therefore the chafer reinforcement fabric component 250 can not be shown continuing into the page as it wraps under the bead 102 and then back up again on the other side of the bead 102, as illustrated in the cross-sectional view of Figure 2C.

The present invention, as shown in Figure 2C, was tested in a 235/60R16 EMT tire, both in laboratory simulation tests and also in road tests on a commercially available passenger vehicle. Three tire constructions were tested, corresponding to the constructions described with respect to Figures 2A, 2B, and 2C, wherein the tire 100 (Figure 2A) is a standard construction (prior art) control; the tire 100' (Figure 2B) is a control that additionally incorporates the chipper 218; and the tire 101 (Figure 2C) is the inventive tire construction that incorporates the chafer reinforcement fabric component 250 as described hereinabove.

In the laboratory tests, several tires of each of the above-described constructions were operated uninflated at 88 kph (kilometers per hour) under a load of 496 kg (kilograms).

In roadway testing on a BMW 7 series vehicle, several tires of each construction were operated uninflated at a reduced speed of 80 kph on a standard test road. The tires on the vehicle were showing a camber angle of two degrees (axially inward at the top of the wheel) which is standard for this vehicle. The speed was reduced to 80 kph in order to avoid, as much as possible, mechanical tire failures due to heavy shocks on road irregularities, so as to better allow chafer cracks to appear and propagate.

Test result averages are shown in the following chart.

| | **Laboratory Run-Flat Test** | | **Vehicle/Roadway Run-Flat Test** | |
|---|---|---|---|---|
| **Construction** | **Failure km** | **Failure** | **Failure km** | **Failure** |
| **Standard (100)** | 187 | insert crack | 350 | Chafer cracking |
| **Chipper (100')** | 316 | separated chipper/apex | 450 | Chafer cracking |
| Invention (101) | 524 | liner reversion | (stopped at) 500 | No defect |

A clear discrimination between tested tire constructions is observed, with the best result going to the inventive construction, incorporated in tire 101 of Figure 2C. Clearly, the onset of chafer cracking in the inventive construction, tire 101, is delayed due to improved resistance to chafer cracking compared to other tire constructions.

In addition to objective tire performance measurements, various subjective evaluations of tire performance have also been made, with both inflated and un-inflated tires. The subjective evaluations include, for example, noise, stability, steering effort, linearity, grip, comfort, and rebound. In general, it appears that the inventive tire construction (tire 101) has better overall subjective ratings when compared to similar tire constructions (e.g., tires 100, 100') that do not have the inventive chafer reinforcement fabric component 250. In other words, vehicle handling is generally improved by the use of the inventive tire 101, both when it is inflated and when it is un-inflated. It is believed that the inflated handling is improved with the inventive tire 101 at least partly because the thicker bead area sits better in the rim, essentially being "locked in".

## Claims

1. A pneumatic tire (100, 101) having one or more carcass plies (104, 106) extending between two inextensible beads (102) adapted for mounting on a wheel rim (120) that has a rim flange (122) on each axial side of the tire, and each bead being surrounded by a bead area (292, 294, 296, 298) including a chafer (136, 136') that comprises the portion of the bead area that is in contact with the rim flange, the tire **characterized by** a chafer reinforcement fabric component (250) positioned at a surface where the chafer (136, 136') contacts the wheel rim flange (122).

2. A pneumatic tire (100, 101) according to claim 1, wherein when the tire is mounted on the wheel rim (120), the chafer reinforcement fabric component extends along the outer surface of the chafer (136, 136') to the radially and axially outermost point of the rim flange.

3. A pneumatic tire (100, 101) according to claim 1, wherein the tire is designed to be operated uninflated, and has a rim flange protector that extends the chafer (136, 136') to follow an axially outward curvature of the rim flange; and when the tire is mounted on the wheel rim (120), the chafer reinforcement fabric component extends along the outer surface of the chafer (136, 136') to the axially outermost point of the rim flange protector.

4. A pneumatic tire (100, 101) according to claim 1, wherein the bead area (292, 294, 296, 298) includes a toe (140) and a bead base (241) extending axially inward from the chafer (136, 136') and in contact with the wheel rim (120); and the chafer reinforcement fabric component additionally reinforces and protects the bead area (292, 294, 296, 298) by extending along the surfaces of the toe (140) and the bead base (241).

5. A chafer reinforcement for a pneumatic tire (100, 101) having one or more carcass plies (104, 106) extending between two inextensible beads (102) adapted for mounting on a wheel rim (120) that has a rim flange on each axial side of the tire, and each bead being surrounded by a bead area (292, 294, 296, 298) including a chafer (136, 136') that comprises the portion of the bead area (292, 294, 296, 298) that is in contact with the rim flange, the chafer reinforcement **characterized by** a chafer reinforcement fabric component (250) positioned at a surface where the chafer (136, 136') contacts the wheel rim (120) flange.

6. A chafer reinforcement according to claim 5, wherein the chafer reinforcement fabric component (250) additionally reinforces and protects the bead area (292, 294, 296, 298) by extending along the surfaces of the bead area wherever surfaces of the tire can contact the wheel rim (120) and rim flange during mounting of the tire and during operation of the tire.

7. A chafer reinforcement according to claim 5, wherein the chafer reinforcement fabric component (250) is comprised of non-metallic cords (342, 342'); and in the tire, the cords (342, 342') are oriented at a non-zero angle with respect to the radial direction.

8. A chafer reinforcement according to claim 5, wherein the chafer reinforcement fabric component (250) is comprised of fibers that are woven, having weaving angles in the range of 70 degrees to 110 degrees; and the fibers of the chafer reinforcement fabric component (250) in the tire are oriented between 30 degrees and 60 degrees with respect to the radial direction.

9. A method of constructing a pneumatic tire (100, 101) having one or more carcass plies (104, 106) extending between two inextensible beads (102) adapted for mounting on a wheel rim (120) that has a rim flange on each axial side of the tire, and each bead being surrounded by a bead area (292, 294, 296, 298) including a chafer (136, 136') that comprises the portion of the bead area that is in contact with the rim flange, the method comprising the steps of:
constructing a chafer reinforcement fabric component (250) from fibers;
positioning the chafer reinforcement fabric component (250) at the surface of the chafer (136, 136') where the chafer contacts the wheel rim flange; and
orienting the fibers at an angle of 30 degrees to 60 degrees to the radial direction.

10. A method according to claim 9, comprising the steps of:
anchoring the chafer reinforcement fabric component (250) by extending the chafer reinforcement fabric component from the chafer (136, 136') around the bead; and
further reinforcing and protecting the bead area by extending the chafer
further reinforcing and protecting the bead area by extending the chafer reinforcement fabric component along the surfaces of the bead area (292, 294, 296, 298) wherever surfaces of the tire can contact the wheel rim (120) and rim flange during mounting of the tire and during operation of the tire.
